# EUROPEAN PATENT APPLICATION

(11) **EP 2 442 082 A1**
(43) Date of publication of application: **18.04.2012**
(21) Application number: 10013600.1
(22) Date of filing: 13.10.2010
(51) Int. Cl.: G01K 11/12

(54) **An electronic part with a warning or a hiding effect**

(71) Applicant: Ceramate Technical Co., Ltd, Taoyuan County (TW)
(72) Inventor: Wang, Robert, Taoyuan County (TW)
(74) Representative: Zeitler - Volpert - Kandlbinder

(57) **Abstract**

An electronic part with a warning or a hiding effect substantially comprises an electronic part body, a predetermined position on a surface of which is coated with a temperature sensitive layer having a certain color. Heating the temperature sensitive layer when the heating temperature of the electronic part body soared to a predetermined temperature allows the temperature sensitive layer to be invisible. Thereby, the temperature sensitive layer presents to be wiped so as to achieve the warning and hiding effect.

## Description

### BACKGROUND OF THE INVENTION

### 1. Field of the Invention

The present invention relates to an electronic part with a warning or a hiding effect.

### 2. Description of the Related Art

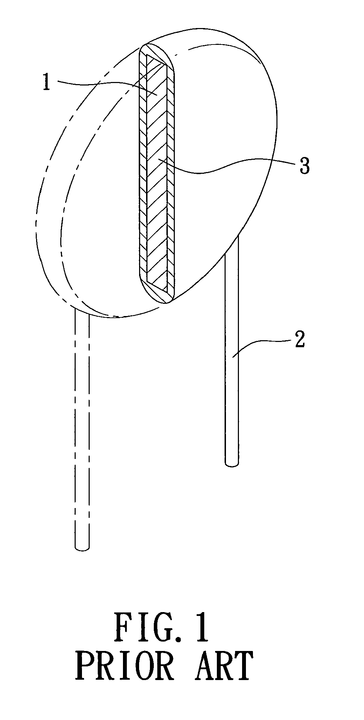

Various electronic parts with different efficiency can be found on the circuit boards of the existing electrical equipment. Electronic parts providing divergent functions, the electrical equipment is accessible. The existing electronic parts like the surge absorber, the transistor, IC, the diode, the electric resistance, and the capacitance are all commonly used in the market. Fig. 1 shows a schematic view of one of the common electronic parts. An electronic part body 1 is previously welded to two connecting legs 2 that could be inserted on a circuit board. The electronic part body 1 is enveloped in an insulating layer 3 for the safety concern. Herein, not like the mechanical parts, the healthy state of the electronic parts is difficult to be judged from their appearance. Thus, in practical using, the electronic parts have the following shortcomings:
1. The electronic parts are assembled to the circuit board for the entire circuit board to be electrically tested. Herein, if parts of the electronic parts are damaged and incur an abnormal electric current, it is in fact difficult to find out the irregular one. As a result, an electric meter is needed for checking the healthy state of every electronic part, which easily costs a lot of time and is inefficient.
2. In time of the electrical equipment being operated, any one of the electronic parts could be advancely damaged in view of the irregular voltage and the abnormal electric current. Or the aging state of the affected electronic part may be caused in a long period of using time. However, such influenced electronic part as aforementioned is still utilized by the unwitting users, which accelerates the worsening of the electronic part. The worse electronic part may grow heat as a result of the increased impedance in the electronic part or an electric leakage. Worst of all, the seriously damaged electronic part may bring about fire so as to break products disposed therearound, and users' safety is also influenced.

### SUMMARY OF THE INVENTION

The object of the present invention is to provide an electronic part with a warning or a hiding effect that conduces to an early discovery of the inferior electronic part by observing the color variation happened on the electronic part under the different working temperatures.

The other object of the present invention is to provide an electronic part with a warning or a hiding effect that allows an ID number or an identification pattern on the electronic part to be wiped off after the electronic part is inserted, so that a hiding effect is achieved.

The electronic part with a warning or a hiding effect substantially comprises an electronic part body. Wherein, a temperature sensitive layer is coated on a predetermined position of a surface of the electronic part body. The temperature sensitive layer has a certain color. The temperature sensitive layer becomes invisible with the result that the heat of the electronic part body soared to a predetermined temperature, so that the temperature sensitive layer presents like being "wiped", thereby obtaining the warning or the hiding effect.

### BRIEF DESCRIPTION OF THE DRAWINGS

Fig. **1** is a semi-cross-sectional view showing a conventional electronic part;
Fig. **2** is a semi-cross-sectional view showing a preferred embodiment of the present invention;
Fig. **3** is a schematic view showing the preferred embodiment of the present invention being heated;
Fig. **4** is a schematic view showing the preferred embodiment of the present invention being applied on a socket;
Fig. **5** is a schematic view showing the preferred embodiment of the present invention being applied on the socket and heated;
Fig. **6** is a schematic view showing the preferred embodiment of the present invention being applied on an extend cable and heated;
Fig. **7** is a schematic view showing the preferred embodiment of the present invention being applied on a plug and switch and heated;
Fig. **8** is a perspective view showing a second preferred embodiment of the present invention; and
Fig. **9** is a schematic view showing the second embodiment of the present invention being heated.

### DETAILED DESCRIPTION OF THE PREFERRED EMBODIMENTS

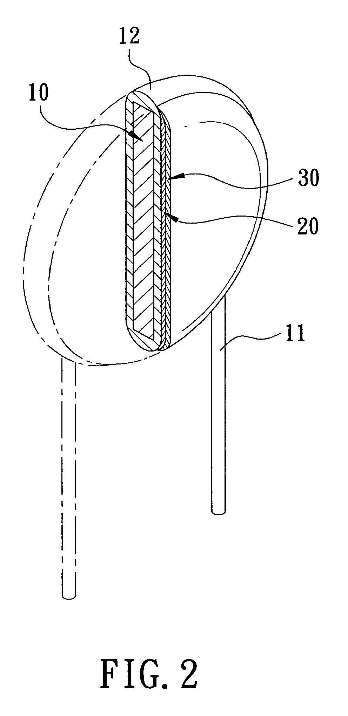

Fig. **2** shows a semi-cross-sectional view of a first embodiment of the present invention. An electronic part with a warning or a hiding effect comprises an electronic part body 10. Wherein, the electronic part body 10 is set with a certain working temperature in its normal operation. If the electronic part body is damaged, the working temperature is accordingly increased since the impedance therein is raised or an electric leakage is happening. The electronic part may adopt the surge absorber, the gas discharge tube, the transistor, the IC, the diode, the electric resistance, the capacitance, and etc. In this embodiment, the electronic part body 10 adopts the surge absorber. Additionally, the electronic part body 10 is welded to two connecting legs 11, and a surface of the electronic part body 10 is enveloped in an insulating layer 12. Above statements same to the prior art are herein omitted. The characterized part of the present invention is described as follows:

A side of the insulating layer 12 of the surface of the electronic part body 10 is coated with a displaying layer 20. In the preferred embodiment, the surface of the electronic part body 10 is coated with the displaying layer 20 adopting coloring with a predetermined color, such as a warning red. Herein, the displaying layer 20 is not affected by the temperature variation. Moreover, the electronic part body 10 also contains a temperature sensitive layer 30 coating an outer surface of the displaying layer 20. The temperature sensitive layer 30 adopts temperature sensitive ink that could be spread, printed, transfer printed, or stuck to the displaying layer 20. In this embodiment, the temperature sensitive layer 30 is spread on the surface of the electronic part body 10. Moreover, the temperature sensitive layer 30 could be gradually invisible while the environmental temperature is soared, so that the temperature sensitive layer 30 presents like being "wiped". In this embodiment, the normal working temperature of the surge absorber is between 30 degrees to 40 degrees, so a temperature critical point at which the temperature sensitive layer 30 starts to change its color is set above 40 degrees.

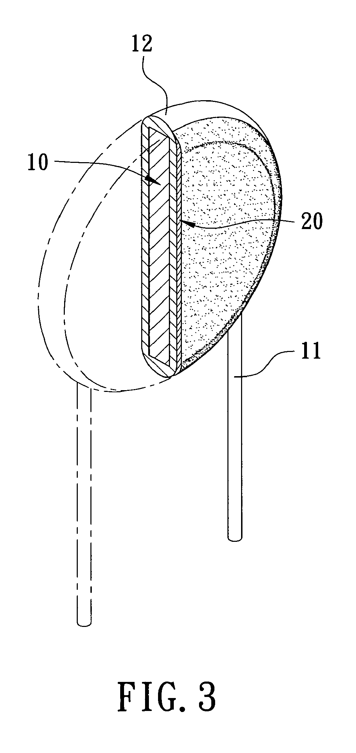

Referring to Fig. 3, the surface of the electronic part body 10 is coated with the displaying layer 20, and the surface of the displaying layer 20 is coated with the temperature sensitive layer 30. Thereby, the disappearance of the temperature sensitive layer 30 allows the color of the displaying layer 20 to be presented, which means the electronic part becomes heated because of the accumulation of temperature caused by the aging or an abnormal factors. Thus, the soaring temperature results in the temperature sensitive layer 30 disappearing. Thereby, users are reminded to timely replace the damaged electronic part with a new electronic part. Therefore, the entire circuit structure could function well, and the using life of the equipment could be extended.

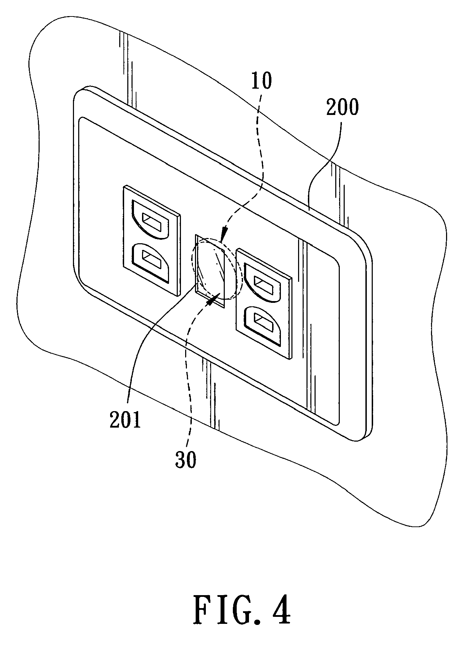

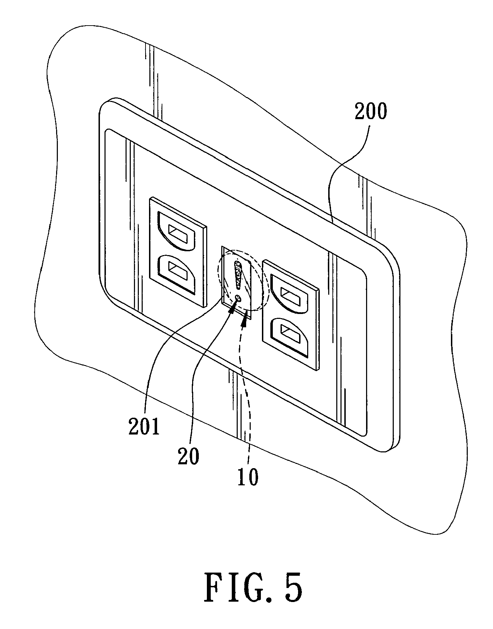

Referring to Fig. 4, the present invention is applied to a socket. The socket 200 is defined with a window 201, in which the electronic part body 10 is disposed. The electronic part body 10 further connects with power wires in the socket 200. In a normal operation of the socket 200, the electronic part body 10 with the temperature sensitive layer 30 could be observed through the window 201. Referring to Fig. 5, if the socket 200 is overloaded with the electric current or is under an unsuited contact, the temperature on the power wires is increased. Herein, the temperature sensitive layer 30 on the surface of the electronic part body 10 is gradually disappeared in view of the heating generated by the electronic part body 10. As a result, the displaying layer 20 that is originally enveloped by the temperature sensitive layer 30 is now exposed. Moreover, in view of the arrangement of the warning color or pattern, such as a warning sign, being applied on the displaying layer 20, users could be timely warned and appropriately remove or replace the abnormal electronic part. Therefore, a fire accident could be avoided.

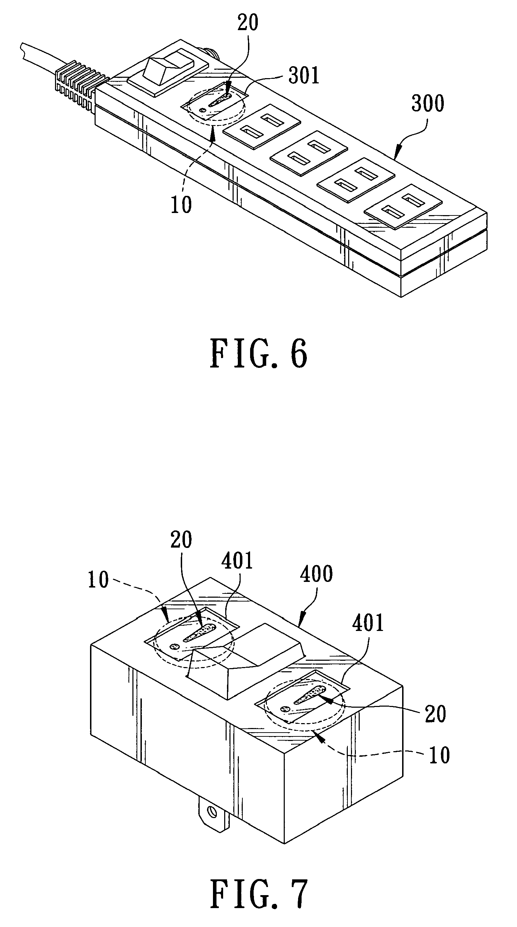

Preferably, referring to Fig. 6, the present invention is applied to an extend cable 300. Herein, the extend cable 300 is defined with a window 301, and the electronic part body 10 is disposed on the extend cable 300, corresponding to the position of the window 301. Thereby, users are able to observe the electronic part body 10 through the window 301. Concurrently, the electronic part body 10 further connects to the power wires of the extend cable 300. Thence, if the extend cable 300 is overloaded with the electric current or is under an unsuited contact, the temperature on the power wires is increased. Herein, the temperature sensitive layer 30 on the surface of the electronic part body 10 is gradually disappeared in view of the heating generated by the electronic part body 10. As a result, the displaying layer 20 that is originally enveloped in the temperature sensitive layer 30 is now exposed to timely caution the users.

Preferably, referring to Fig. 7, the present invention is applied to a plug and switch. Herein, the plug and switch 400 respectively defines with a window 401 at two sides thereof. two bodies 10 are respectively disposed in the windows 401, through which users are able to observe the electronic part body 10. Concurrently, the electronic part body 10 further connects to the power wires of the plug and switch 400. Thence, if the plug and switch 400 is overloaded with the electric current or is under an unsuited contact, the temperature on the power wires is increased. Herein, the temperature sensitive layer 30 on the surface of the electronic part body 10 is gradually disappeared in view of the heating generated by the electronic part body 10. As a result, the displaying layer 20 that is originally enveloped in the temperature sensitive layer 30 is now exposed, whereby users could be timely alarmed.

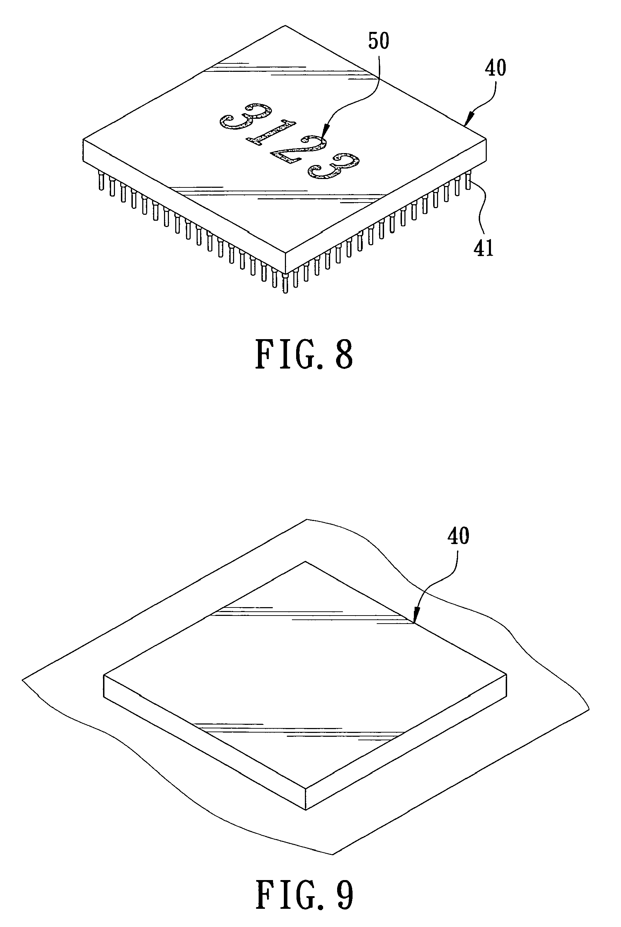

Referring to Fig. 8, the other embodiment of the present invention is shown. An electronic part body 40 adopts the CPU. Several connecting legs 41 are disposed at a bottom of the electronic part body 40. A temperature sensitive layer 50 is coated on a top of the electronic part body 40. Herein, the temperature sensitive layer 50 is performed by an ID number or coloring of an identification pattern of the electronic part body 40. Thereby, in fabricating the electronic part body 40, the ID number or the identification pattern presented by the temperature sensitive layer 50 on the electronic part body 40 is applied for recognition, so that users could accurately assemble the electronic part body 40. Further referring to Fig. 7, in case that the assembled electronic part body 40 does not need the ID number or the identification pattern anymore, and the designer of the electronic part body 40 may not wish his product to be decoded by others in the same trade, heating the electronic part body 40 allows the temperature sensitive layer 50 to be concurrently heated so that the color adopted on the temperature sensitive layer 50 is disappeared thereafter. Thence, the ID number or the identification pattern on the electronic part body 40 is "wiped" or erased, so that the using of the electronic part could be hidden for confidentiality. Generally, if the electronic part is to be installed on a CPU base or a circuit board, a tin stove with a high temperature is needed for soldering the connecting legs 41. Therefore, the temperature sensitive layer 50 on the electronic part body 40 can be heated via the high temperature generated during soldering, which renders the ID number or the identification pattern on the electronic part body 40 wiped or erased. As a result, the ID number or the identification pattern on the electronic part body 40 is not shown after soldering the connecting legs 41, so that others in the same trade are unable to know the content related to the electronic part. Thus, the using of the electronic part is hidden and practiced secrecy.

Accordingly, the present invention has the following advantages:
1. Warning for protection: In using the electronic part, an abnormal voltage or electric current, an aging state resulted from a long period time of using, and a heat caused by an electric leakage from the electronic part are all observable via the variation of the color or pattern on the electronic part. Thus, users are cautioned to stop using the electronic part, and the electronic part is avoided from burning in view of the heat. Thereby, products surrounding the electronic part and users are assured to be safe. Timely replacing the damaged electronic part further contributes to a preventable danger.
2. Hiding for secrecy: Simply heating the electronic part body allows the ID number or the identification pattern to be hidden. For example, while the electronic part body is assembled via the tin stove, the temperature sensitive layer is concurrently heated, and the color of the temperature sensitive layer is disappeared accordingly, which results in the ID number or the identification pattern off the electronic part body being wiped. Thus, the using of the electronic part is hidden and practiced secrecy.

## Claims

1. An electronic part with a warning or a hiding effect substantially comprising an electronic part body;
wherein, a predetermined position of a surface of said electronic part body being coated with a temperature sensitive layer; said temperature sensitive layer being in a certain color; said temperature sensitive layer being gradually invisible when said electronic part body is soared to a predetermined temperature, so that said temperature sensitive layer presents to be wiped for obtaining the warning or hiding effect.

2. The electronic part as claimed in claim 1, wherein, said temperature sensitive layer is a kind of temperature sensitive ink which adheres to said surface of said electronic part body by coating.

3. The electronic part as claimed in claim 1, wherein, said temperature sensitive layer is spread on a side surface of said electronic part body.

4. The electronic part as claimed in claim 1, wherein, a displaying layer is disposed between said electronic part body and said temperature sensitive layer; said displaying layer is a sort of coloring in a certain color spreading on said surface of said electronic part body.

5. The electronic part as claimed in claim 4, wherein, said displaying layer adopts a pattern.

6. The electronic part as claimed in claim 4, wherein, said electronic part body is installed in a socket which disposes a window, thereby allowing said electronic part body to be exposed in said window.
